Europäisches Patentamt

European Patent Office

Office européen des brevets

(19)

(11) Veröffentlichungsnummer: **0 274 007**
**B1**

(12) **EUROPÄISCHE PATENTSCHRIFT**

(45) Veröffentlichungstag der Patentschrift:
05.09.90

(51) Int. Cl.⁵: **G05D 23/24**

(21) Anmeldenummer: **87114178.4**

(22) Anmeldetag: **29.09.87**

(54) **Elektronischer Sicherheitstemperaturbegrenzer.**

(30) Priorität: **08.01.87 CH 42/87**

(43) Veröffentlichungstag der Anmeldung:
**13.07.88 Patentblatt 88/28**

(45) Bekanntmachung des Hinweises auf die Patenterteilung:
**05.09.90 Patentblatt 90/36**

(84) Benannte Vertragsstaaten:
**CH DE FR IT LI NL**

(56) Entgegenhaltungen:
**DE-A- 2 643 658**
**FR-A- 2 294 474**
**FR-A- 2 481 425**
**GB-A- 2 163 615**

(73) Patentinhaber: **Landis & Gyr Betriebs AG,**
**CH-6301 Zug(CH)**

(72) Erfinder: **Bösch, Heinz, Gärtnerweg 6,**
**CH-6010 Kriens(CH)**

ACTORUM AG

## Beschreibung

Die Erfindung bezieht sich auf einen elektronischen Sicherheitstemperaturbegrenzer gemäss dem Oberbegriff des Anspruchs 1 und auf ein Verfahren mit diesem elektronischen Sicherheitstemperaturbegrenzer.

Sicherheitstemperaturbegrenzer werden in Wärmeerzeugern z. B. von Heizungsanlagen eingesetzt, wo als Wärmeträger eine Flüssigkeit, z. B. Wasser, oder Gas, z. B. Luft, vorhanden ist. Der Sicherheitstemperaturbegrenzer ist eine Einrichtung, die ein Signal für die Unterbrechung der Energiezufuhr abgibt, wenn die Flüssigkeit eine Grenztemperatur erreicht. Die Unterbrechung der Energiezufuhr ist dabei verbunden mit einer Schaltungsverriegelung, die nur von Hand oder mit einem Werkzeug rückgestellt werden kann.

Ein Sicherheitstemperaturbegrenzer der eingangs genannten Gattung ist bereits bekannt aus der DE-OS 26 43 658. Dabei werden Sollwertgeber und Istwertgeber durch Messbrücken realisiert, welche im normalen Betriebszustand abgeglichen sind. Die Speisung der Brückenschaltungen erfolgt über das statische Signal einer Gleichspannungsquelle. Gegenüber einem anderen bekannten Sicherheitstemperaturbegrenzer, welcher in der Druckschrift "Elektronische selbstüberwachende Feuerraum-Temperaturbegrenzer und Sicherheits-Temperaturbegrenzer nach DIN 3440 und TRD 604, 11.82/V" der Firma Juchheim beschrieben ist, benötigt der gattungsgemässe Sicherheitstemperaturbegrenzer nur einen einzigen Regler.

Der Erfindung liegt die Aufgabe zugrunde, einen anderen Weg zur Einsparung eines Zweitreglers zu finden, bei dem auch ohne Messbrückenabgleich und unter Ausnutzung eines vorhandenen Computers kostengünstig eine grosse Funktionssicherheit bei einfachem Aufbau möglich ist.

Die genannte Aufgabe wird erfindungsgemäss durch die im Kennzeichen des Anspruchs 1 angegebenen Merkmale gelöst.

Ein Ausführungsbeispiel der Erfindung ist in der Zeichnung dargestellt und wird im folgenden näher beschrieben.

Es zeigen:

Fig. 1 ein Blockschaltbild eines mit einem Computer ausgerüsteten Steuergerätes für eine Heizungsanlage,

Fig. 2 ein Blockschaltbild eines elektronischen Sicherheitstemperaturbegrenzers mit einer Interfaceschaltung,

Fig. 3 ein Schaltbild eines Schwellwertschalters,

Fig. 4 ein Schaltbild einer Kondensator-Umladeschaltung und

Fig. 5 einen Teil eines Flussdiagramms des Computers.

Gleiche Bezugszahlen bezeichnen in allen Figuren der Zeichnung gleiche Teile.

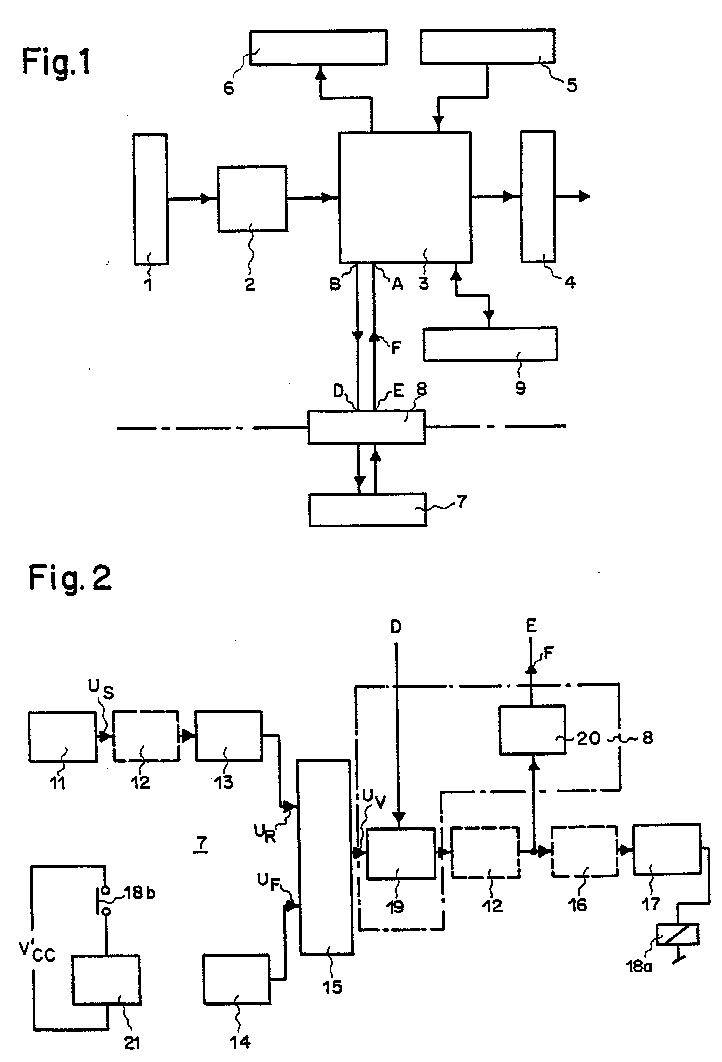

Das in der Fig. 1 dargestellte Steuergerät enthält Eingänge 1, die über Analog/Digital-Wandler 2 mit Dateneingängen eines Computers 3 verbunden sind, dessen Datenausgänge ihrerseits über Ausgänge 4 auf ein nicht dargestelltes Heizungsregelgerät geführt sind. Ein Tastenfeld 5, welches unter anderem eine Entriegelungstaste enthält, ist mit weiteren Dateneingängen des Computers 3 verbunden. Weitere Datenausgänge des Computers 3 sind ihrerseits auf ein Anzeigefeld 6 geführt. Je ein Ausgang und ein Eingang eines elektronischen Sicherheitstemperaturbegrenzers 7 ist über eine Interfaceschaltung 8 mit einem Betriebszustandseingang A bzw. Verriegelungsausgang B des Computers 3 verbunden. Ein unverlierbarer Speicher 9 ist einem Schreib/Lese-Speicher ("Random access memory" RAM) parallel geschaltet, der sich nicht dargestellt im Innern des Computers 3 befindet.

Analoge Messsignale, z. B. die Ausgangssignale von nicht dargestellten Temperaturfühlern, werden über die Eingänge 1 den Analog/Digital-Wandlern 2 zugeführt, wo sie in digitalen Signalen umgewandelt werden, um anschliessend im Computer 3 aufbereitet zu werden. Der Computer 3 beliefert anschliessend über die Ausgänge 4 das nicht dargestellte Heizungsregelgerät mit benötigten Daten. Das Eingabefeld 5 ermöglicht die manuelle Eingabe von Daten und Befehlen in den Computer 3, dessen Daten und Betriebszustände ihrerseits durch das Anzeigefeld 6 angezeigt werden können. Da bei Netzausfall die im Schreib/Lese-Speicher des Computers 3 gespeicherten Daten und Befehle unwiderruflich verloren gehen, werden diese Daten und Befehle fortlaufend auch im unverlierbaren Speicher 9, der z. B. ein $E^2PROM$ ist, gespeichert und dort jeweils im richtigen Augenblick abgerufen. Der Sicherheitstemperaturbegrenzer 7 liefert über die Interfaceschaltung 8 ein Betriebszustandssignal an den Computer 3, in dem das Betriebszustandssignal mit einem Zustandssignal der im Eingabefeld 5 enthaltenen Entriegelungstaste logisch verknüpft wird, um als Verriegelungssignal anschliessend über den Verriegelungsausgang B des Computers 3 und die Interfaceschaltung 8 wieder den Sicherheitstemperaturbegrenzer 7 zu erreichen. Der Computer 3 ist z. B. ein Microcomputer.

Der Aufbau des Sicherheitstemperaturbegrenzers 7 und der Interfaceschaltung 8 ist aus der Fig. 2 ersichtlich. Der Sicherheitstemperaturbegrenzer 7 besteht aus einem Oszillator 11, zwei Impedanzwandlern 12, die fakultativ vorhanden und daher in der Fig. 2 gestrichelt dargestellt sind, einem Sollwertgeber 13, einem Istwertgeber 14, einem Schwellwertschalter 15, einem Filter 16, einer Kondensator-Umladeschaltung 17 und einem Relais 18a; 18b. Das nur fakultativ vorhandene Filter 16 ist gestrichelt gezeichnet und der Kondensator-Umladeschaltung 17 vorgeschaltet. Die Interfaceschaltung 8 besteht ihrerseits aus einer Verriegelungsschaltung 19 und einer Anordnung 20 zur Umwandlung eines dynamischen Signals in einen konstanten Logikwert. Die Bauelemente 11 bis 19 bilden zusammen einen sich selbstüberwachenden Regler. Das Relais 18a; 18b ist z. B. ein Arbeitsrelais und besitzt eine Relaisspule 18a sowie einen Schliesskontakt 18b, mit dem ein Steuergerät 21 einer Energiezufuhrquelle ein- und ausgeschaltet wird. Die Energiezufuhrquelle ist z. B. der Brenner einer Heizungsanlage.

Der Sollwertgeber 13 wird vom Oszillator 11 gespeist, indem der Ausgang des Oszillators 11 über den fakultativ vorhandenen ersten Impedanzwandler 12 mit dem Eingang des Sollwertgebers 13 verbunden ist, dessen Ausgang seinerseits auf einen ersten Eingang des Schwellwertschalters 15 geführt ist. Der Ausgang des Istwertgebers 14 ist mit einem zweiten Eingang des Schwellwertschalters 15 verbunden, dessen Ausgang seinerseits auf die Relaisspule 18a geführt ist, indem der Ausgang der dem Schwellwertschalter 15 nachgeschalteten Verriegelungsschaltung 19 der Interfaceschaltung 8 über die fakultativ nachgeschaltete Kaskadenschaltung 12; 16 des zweiten Impedanzwandlers 12 und des diesem nachgeschalteten Filters 16 auf den Eingang der Kondensator-Umladeschaltung 17 geführt ist, deren Ausgang seinerseits mit einem Pol der Relaisspule 18a verbunden ist. Der andere Pol der Relaisspule 18a liegt an Masse. Das Bezugspotential aller Speisespannungen ist die Masse. Der Aufbau des Sollwertgebers 13 und des Istwertgebers 14 ist an sich bekannt und daher nicht dargestellt. Der Sollwertgeber 13 ist ein Spannungsteiler, der z. B. aus zwei in Reihe geschalteten Widerständen besteht. Der Istwertgeber 14 ist ebenfalls ein Spannungsteiler, der einen Temperaturfühler enthält, der in Reihe geschaltet ist mit einer Reihenschaltung, die z. B. mindestens aus einem Widerstand und einer Diode besteht. Der Spannungsteiler des Istwertgebers 14 wird von einer Gleichspannung gespeist, deren Bezugspotential an Masse liegt, wobei ein Pol des Temperaturfühlers ebenfalls an Masse liegt und sein anderer Pol den Ausgang des Istwertgebers 14 bildet. Der Ausgang der Verriegelungsschaltung 19 ist anderseits über den fakultativ vorhandenen zweiten Impedanzwandler 12 und die Anordnung 20 auf den Betriebszustandseingang A des Computers 3 geführt, dessen Verriegelungsausgang B mit einem Verriegelungseingang D der Verriegelungsschaltung 19 verbunden ist. Die Verriegelungsschaltung 19 enthält ein nicht dargestelltes Und-Gatter, dessen erster Eingang mit dem Verriegelungseingang D verbunden ist und dessen zweiter Eingang auf den Ausgang des Schwellwertschalters 15 geführt ist.

Das Ausgangssignal des Oszillators 11 kann eine beliebige Kennlinienform aufweisen. In einer bevorzugten Ausführung ist es rechteckförmig. In diesem Fall ist der Oszillator 11 ein astabiler Multivibrator und kann z. B. den im Linear Handbook 1978, Seite 5 - 47, National Semiconductor Corporation, dargestellten Aufbau besitzen. Die beiden Impedanzwandler 12 sind in der Regel identisch aufgebaut. Sie sind z. B. mittels je eines Operationsverstärkers aufgebaute und an sich bekannte Verstärker, die je einen Verstärkungsfaktor Eins besitzen. Das Filter 16 begrenzt die Bandbreite des dynamischen Eingangssignals der Kondensator-Umladeschaltung 17 aus sicherheitstechnischen Gründen.

Der in der Fig. 2 dargestellte Sicherheitstemperaturbegrenzer 7 enthält einen einzigen sich selbstüberwachenden Regler, der die Relaispule 18a ansteuert und dessen Sollwert das Ausgangssignal des Oszillators 11 ist. Die Relaisspule 18a wird von diesem Regler über die Kondensator-Umladeschaltung 17 angesteuert. Selbstüberwachend heisst, dass Bauteilfehler, die sich auf die unsichere Seite hin auswirken, selbsttätig erkannt werden. Um dies zu realisieren, wird ein dynamisches Signal, d. h. ein zeitvariables Dauersignal am Ausgang des Oszillators 11, als Sollwert für den Regler verwendet. Damit wird erreicht, dass die Pegel innerhalb des Regelkreises sich im Normalbetrieb ändern, während sie im Fehlerfall konstant bleiben. Dadurch kann der Fehler erkannt werden. Mit Hilfe des Temperaturfühlers des Istwertgebers 14, der z. B. ein Ni-1000 Ohm-Fühler ist, wird die Temperatur eines Wärmeträgers, z. B. die Kesseltemperatur einer Heizungsanlage, gemessen. Der im Istwertgeber 14 enthaltene Spannungsteiler erzeugt einen der Flüssigkeitstemperatur entsprechenden Spannungswert $U_F$ am Ausgang des Istwertgebers 14, wobei $U_F$ ein Gleichspannungssignal ist. Ist die zulässige Grenztemperatur des Wärmeträgers z. B. 110° C, dann wird, z. B. unter Berücksichtigung der Toleranzwerte des Temperaturfühlers und der Elektronik, der Wert von $U_F$ maximal gleich 5,5 V bei 108° C und minimal gleich einen Kurzschlusswert 4,24 V bei -10° C gewählt. Die Diode im Istwertgeber 14 dient der Temperaturkompensation sowie der Reduktion des Einflusses von Spannungsschwankungen, so dass Sollwert und Istwert des Reglers diesbezüglich parallel verlaufen und gleichgrossen Aenderungen unterworfen sind. Der Oszillator 11 erzeugt das dynamische Signal, das im Sollwertgeber 13 spannungsmässig heruntergeteilt wird. Ist das dynamische Signal rechteckförmig, dann besitzt die rechteckförmige Ausgangsspannung $U_S$ des Oszillators 11 während seiner Impulsdauer einen Maximalwert von z. B. 10,5 V, der ein der Grenztemperatur des Wärmeträgers entsprechender Grenzsollwert ist, und während seiner Impulslücke einen Minimalwert von z. B. 8,1 V, der einem Kurzschluss-Testsollwert entspricht. Die diesen beiden Werten 10,5 V und 8,1 V zugehörigen Extremwerte der rechteckförmigen Spannung $U_R$ am Ausgang des Sollwertgebers 13 sind dann z. B. 5,5 V bzw. 4,24 V und damit gleich dem vorgegebenen Maximal- bzw. Minimalwert der Spannung $U_F$ am Ausgang des Istwertgebers 14. Aus Gründen der Selbstüberwachung, d. h. der Fehlererkennung, werden die Werte von $U_F$ und $U_R$ so gewählt, dass sie beide immer kleiner Vcc/2 sind, wenn Vcc die Speisespannung des Oszillators 11, des Impedanzwandlers 12 und des Istwertgebers 14 ist. Vcc ist z. B. gleich 12 V. Im normalen Betriebszustand liegt der Wert des Istwertes des Reglers, d. h. der Wert der Spannung $U_F$, zwischen dem Maximalwert 5,5 V und dem Minimalwert 4,24 V des rechteckförmigen Sollwertes, d. h. der rechteckförmigen Spannung $U_R$. Die Ausgangsspannung $U_V$ des Schwellwertschalters 15 ist dann auch rechteckförmig und besitzt einen Maximalwert, der in der Grössenordnung des Speisespannungswertes Vcc des Schwellwertschalters 15 liegt und z. B. gleich 10,5 V ist, und einen Minimalwert von 0 V.

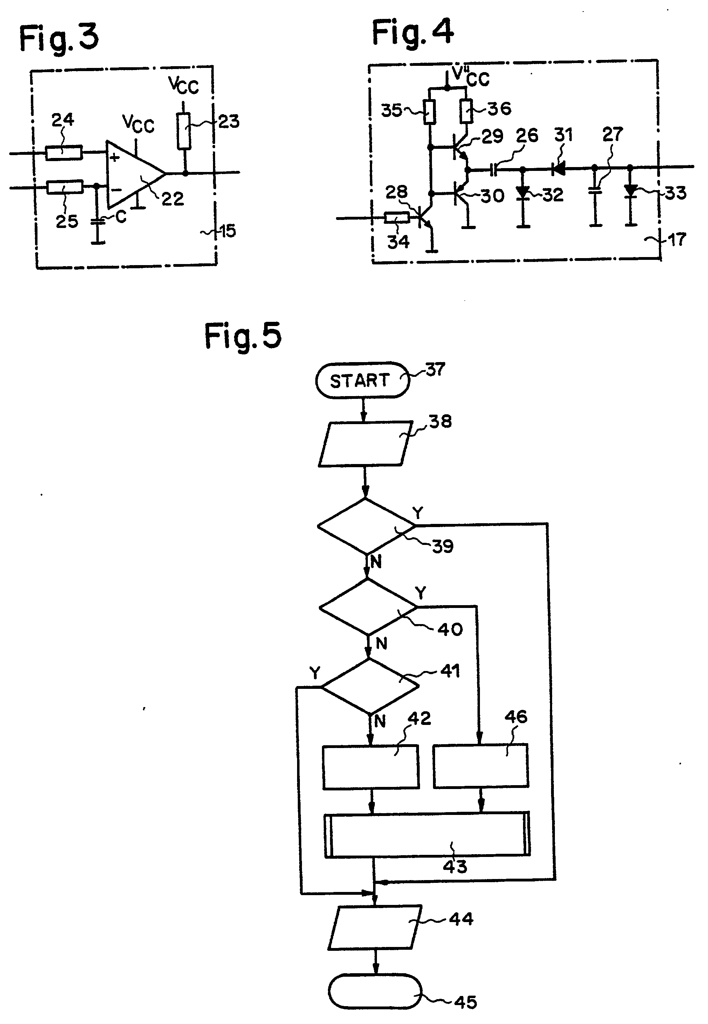

Der Schwellwertschalter 15 enthält in einer bevorzugten Ausführung einen Komparator 22 und ist dann gemäss der Fig. 3 aufgebaut. Der dargestellte Komparator 22 ist von einer Gleichspannung Vcc gespeist und sein Ausgang wird über einen Widerstand 23 ebenfalls von der Gleichspannung Vcc gespeist. Der erste Eingang des Schwellwertschalters 15 ist über einen Widerstand 24 mit dem nichtinvertierenden Eingang und sein zweiter Eingang über einen Widerstand 25 mit dem invertierenden Eingang jeweils des Komparators 22 verbunden, dessen Ausgang gleichzeitig der Ausgang des Schwellwertschalters 15 ist. Der invertierende Eingang des Komparators 22 liegt ausserdem über einen Kondensator C an Masse.

Die in der Fig. 4 dargestellte Kondensator-Umladeschaltung 17 besteht aus zwei Kondensatoren 26 und 27, drei Transistoren 28 bis 30, drei Dioden 31 bis 33 und drei Widerständen 34 bis 36. Die beiden Transistoren 29 und 30 sind in Gegentakt geschaltet und werden von einem Vorverstärker 28; 34, der aus dem Transistor 28 und dem Widerstand 34 besteht, angesteuert. Mit andern Worten: Der Kollektor des Transistors 28 ist direkt auf die Basis des Transistors 29 und auf die Basis des Transistors 30 geführt und die Emitter der beiden Transistoren 29 und 30 sind miteinander verbunden. Eine weitere Gleichspannung $V''cc$, deren Bezugspotential an Masse liegt, speist über den Widerstand 35 den Kollektor des Transistors 28 und über den Widerstand 36 den Kollektor des Transistors 29, während der Emitter des Transistors 28 und der Kollektor des Transistors 30 jeweils an Masse liegen. Der Eingang der Kondensator-Umladeschaltung 17 ist über den Widerstand 34 mit der Basis des Transistors 28 verbunden und ihr Ausgang ist gebildet durch einen Pol, namlich die Anode, der Diode 31, der ausserdem noch über eine Parallelschaltung 27; 33, die aus dem Kondensator 27 und der Diode 33 besteht, an Masse liegt. Der andere Pol, namlich die Kathode, der Diode 31 ist über den Kondensator 26 mit den Emittern der Transistoren 29 und 30, d.h. mit dem Ausgang der Gegentaktschaltung 29; 30, über die Diode 32 mit masse verbunden, wobei die Kathode der Diode 31 mit der Anode der Diode 32 verbunden ist.

Die rechteckförmige Ausgangsspannung $U_V$ des Schwellwertschalters 15 lädt im Normalbetrieb über die Kaskadenschaltung 19; 12; 16 der Verriegelungsschaltung 19, des zweiten Impedanzwandlers 12 und des Filters 16 (siehe Fig. 2) die in der Kondensator-Umladeschaltung 17 enthaltenen Kondensatoren 26 und 27 dauernd um. Während der Impulslücken der rechteckförmigen Spannung $U_V$ wird der Kondensator 26 über den Widerstand 36, den Transistor 29 und die Diode 32 von der Speisespannung $V''cc$, die z. B. 20 V beträgt, aufgeladen. Die Relaisspule 18a bezieht dann ihre Energie aus dem Kondensator 27. Während der Impulsdauer der rechteckförmigen Spannung $U_V$ entlädt sich der Kondensator 26 über den Transistor 30, die Diode 31 und den Kondensator 27, so dass der letztere erneut geladen wird. In diesem Fall bezieht die Relaisspule 18a ihre Energie aus den beiden Kondensatoren 26 und 27. Das Arbeitsrelais 18a; 18b ist somit dauernd angezogen und eine Speisespannung $V'cc$ (siehe Fig. 2) speist dauernd das Steuergerät 21 des Brenners über den jetzt geschlossenen Schliesskontakt 18b des Arbeitsrelais 18a; 18b, so dass die Heizungsanlage in Betrieb ist und bleibt. Gleichzeitig erreicht das dynamische, rechteckförmige Ausgangssignal des Schwellwertschalters 15 über die Kaskadenschaltung 19; 12 der Verriegelungsschaltung 19 und des zweiten Impedanzwandlers 12 die Anordnung 20. Diese enthält ein nicht dargestelltes RC-Glied, dessen Zeitkonstante gross genug gewählt worden ist, damit der Kondensator des RC-Gliedes sich in den Impulslücken nicht nennenswert entladen kann. Dieser Kondensator wird über den Widerstand des RC-Gliedes durch das rechteckförmige Ausgangssignal des Schwellwertschalters 15 auf einen Spannungswert geladen, der einem Logikwert "1" des Computers 3 entspricht. Im Normalbetrieb erscheint somit als Ausgangssignal F am Ausgang der Anordnung 20 ein Betriebszustandssignal, welches gleich einem Logikwert "1" ist. Die Anordnung 20 hat somit das dynamische Signal in einen Logikwert umgewandelt.

Ueberschreitet die Temperatur des Wärmeträgers deren Grenztemperatur oder hat es einen Unterbruch im Temperaturfühler des Istwertgebers 14, dann ist die Istwertspannung $U_F$ immer grösser als die rechteckförmige Sollwertspannung $U_R$, so dass die Ausgangsspannung $U_V$ des Schwellwertschalters 15 dauernd gleich 0 V ist. Dann wird der Kondensator 27 in der Kondensator-Umladeschaltung 17 nicht mehr durch eine Entladung des Kondensators 26 geladen. Das Arbeitsrelais 18a; 18b fällt ab und schaltet mit Hilfe des jetzt geöffneten Schliesskontaktes 18b das Steuergerät 21 des Brenners ab. Die Nullvoltausgangsspannung des Schwellwertschalters 15 erreicht über die Kaskadenschaltung 19; 12 die Anordnung 20, deren Kondensator dadurch entladen wird, so dass das Ausgangssignal F der Anordnung 20 ein Logikwert "O" annimmt.

Bei einem Kurzschluss im Temperaturfühler des Istwertgebers 14 sinkt die Istwertspannung $U_F$ auf einen Wert, der dauernd niedriger ist als die rechteckförmige Sollwertspannung $U_R$, so dass die Ausgangsspannung $U_V$ des Schwellwertschalters 15 dauernd gleich der Spannung 10,5 V ist. Der Kondensator 26 in der Kondensator-Umladeschaltung 17 lädt sich nicht mehr auf, da der Transistor 29 dauernd gesperrt ist, und kann demnach auch nicht mehr den Kondensator 27 durch seine Entladung laden. Das Arbeitsrelais 18a; 18b fällt auch diesmal wieder ab und schaltet mit seinem jetzt offenen Schliesskontakt 18b das Steuergerät 21 des Brenners ab. Diesmal erreicht jedoch eine Schwellwertschalter-Ausgangsspannung von 10,5 V über die Kaskadenschaltung 19; 12 die Anordnung 20, deren Kondensator auf 10,5 V aufgeladen wird. Dies entspricht einem Logikwert "1" des Computers 3, so dass genau wie im Normalbetrieb ein Logikwert "1" als Ausgangssignal F am Ausgang der Anordnung 20 vorhanden ist.

Zusammengefasst: Im Normalbetrieb und bei einem Kurzschluss des Temperaturfühlers des Istwertgebers 14 ist das Ausgangssignal F gleich dem Logikwert "1". In diesen beiden Fällen darf der Sicherheitstemperaturbegrenzer 7 nicht verriegelt werden. Bei Uebertemperatur des Kessels oder bei Unterbruch des Temperaturfühlers des Istwertgebers 14 ist das Ausgangssignal F gleich dem Logikwert "0". In diesen Fällen muss der Sicherheitstemperaturbegrenzer 7 verriegelt werden und kann nur mit Hilfe der im Tastenfeld 5 enthaltenen Entriegelungstaste entriegelt werden. Daher wird der Wert des Ausgangssignals fortlaufend, z. B. periodisch in einer Zelle eines Speichers des Computers 3 und des unverlierbaren Speichers 9 (siehe Fig. 1) gespeichert. Auch die Betätigung der Entriegelungstaste, d. h. der jeder Position der Entriegelungstaste zugehörige Logikzustand, wird in diesen beiden Speichern gespeichert. Das Ausgangssignal F bzw. seine gespeicherten Werte werden im Computer 3 mit dem Logikzustand der Entriegelungstaste logisch verknüpft. Dies geschieht in der im Flussdiagramm der Fig. 5 dargestellten Weise mit Hilfe eines Verriegelungsmoduls.

Die Fig. 5 zeigt eine Kaskadenschaltung der Funktionsblöcke 37 bis 45, die in Signalflussrichtung und in der Reihenfolge ihrer Nummerierung hintereinander geschaltet sind. Das dargestellte Flussdiagramm ist ein Teil des Gesamtflussdiagramms des Computers 3 und wird periodisch durchlaufen.

Die Funktionsblöcke 37 bis 45 haben folgende Bedeutung:

Block 37: "Start des Verriegelungsmoduls", Block 38: "Lesen der aktuellen Logik-Zustände des Ausgangssignals F und der Entriegelungstaste in die beiden Speicher", Block 39: Ja/Nein-Entscheidungsblock "Ist der aktuelle gespeicherte Zustand des Ausgangssignals F und der vorhergehende gespeicherte Zustand identisch?", Block 40: Ja/Nein-Entscheidungsblock "Ist der aktuelle Zustand des gespeicherten Wertes des Ausgangssignals F gleich dem Logikwert "0"?", Block 41: Ja/Nein-Entscheidungsblock "Wurde die Entriegelungstaste nicht betätigt?", Block 42: "Entriegeln", Block 43: "Setze einen Freigabespeicher", Block 44: "Lege den Inhalt des Freigabespeichers am Verriegelungseingang D der Verriegelungsschaltung 19 an und Block 45: "Zurück in die Hauptroutine"

Zur Realisierung der Kaskadenschaltung 37; 38; 39; 40, 41; 42; 43; 44; 45 werden die Nein-Ausgänge N der Ja/Nein-Entscheidungsblöcke 39 bis 41 verwendet. Die Ja-Ausgänge Y der Entscheidungsblöcke 39 und 41 sind direkt mit dem Eingang des Blockes 44 verbunden, während der Ja-Ausgang des Entscheidungsblockes 40 über einen Block 46 mit einem zweiten Eingang des Blockes 43 verbunden ist, der die Bedeutung "Lösche den Freigabespeicher" hat. Der Block 46 bedeutet: "Verriegeln".

Ist der aktuelle und vorhergehende gespeicherte Zustand des Ausgangssignals F identisch geblieben, so werden die Blöcke 40 bis 43 und 46 übersprungen. Hat sich der Zustand geändert, so wird der Block 40 wirksam. Ist der aktuelle gespeicherte Wert des Ausgangssignals F gleich "0", so wird über den Block 46 ein Freigabespeicher gelöscht und das Verriegelungssignal am Verriegelungseingang D der Verriegelungsschaltung 19 nimmt den Wert "0" an, wodurch das Und-Gatter der Verriegelungsschaltung 19 gesperrt wird. Ist dagegen der aktuelle gespeicherte Wert des Ausgangssignal F gleich "1", so wird der Block 41 wirksam. Wurde die Entriegelungstaste nicht betätigt, so werden dann die Blöcke 42 und 43 übersprungen und es erfolgt keine Aenderung im Zustand des Freigabespeichers, d. h. der Temperaturbegrenzer bleibt verriegelt. Wurde dagegen die Entriegelungstaste betätigt, wird über Block 42 der Freigabespeicher gesetzt und es erscheint ein Logikwert "1" am Verriegelungseingang D der Verriegelungsschaltung 19, der dessen Und-Gatter freigibt, so dass die Verriegelung aufgehoben ist.

Somit wird die Verriegelungsschaltung 19 bei unterschiedlichem, aktuellem und vorhergehendem gespeichertem Zustand des Ausgangssignals F verriegelt, wenn der aktuelle gespeicherte Zustand des Ausgangssignals F einem bestimmten Logikwert "0" entspricht, und entriegelt, wenn der aktuelle gespeicherte Zustand des Ausgangsignals F dem andern Logikwert "1" entspricht und gleichzeitig die Betätigung der Entriegelungstaste im Computer 3 gespeichert ist. Der Sicherheitstemperaturbegrenzer 7 wird somit nur nach der Betätigung der Entriegelungstaste entriegelt.

## Patentansprüche

1. Elektronischer Sicherheitstemperaturbegrenzer mit einem Relais (18a; 18b), dessen Relaisspule (18a) von einem sich selbstüberwachenden Regler angesteuert ist, wobei der Regler einen einen Temperaturfühler enthaltenden Istwertgeber (14) und einen Sollwertgeber (13) enthält, deren Ausgänge auf je einen Eingang eines Schwellwertschalters (15) geführt sind, dessen Ausgang seinerseits auf die Relaisspule (18a) geführt ist, dadurch gekennzeichnet, dass der Sollwertgeber (13) von einem Oszillator (11) gespeist und der Ausgang einer dem Schwellwertschalter (15) nachgeschalteten Verriegelungsschaltung (19) einerseits über eine Kondensator-Umladeschaltung (17) auf die Relaisspule (18a) und anderseits über eine Anordnung (20), die der Umwandlung eines dynamischen Signals in einen konstanten Logikwert dient, auf einen Betriebszustandseingang (A) eines Computers (3) geführt ist, dessen Verriegelungsausgang (B) mit einem Verriegelungseingang (D) der Verriegelungsschaltung (19) verbunden ist.

2. Elektronischer Sicherheitstemperaturbegrenzer nach Anspruch 1, dadurch gekennzeichnet, dass die Kondensator-Umladeschaltung (17) zwei Kondensatoren (26, 27) enthält, wovon sich der erste Kondensator (26) beim Vorhandensein einer rechteckförmigen Spannung am Ausgang des Schwellwertschalters (15) abwechselnd auf- und entlädt und sich der zweite Kondensator (27) von der Entladung des ersten Kondensators (26) auflädt.

3. Elektronischer Sicherheitstemperaturbegrenzer nach Anspruch 2, dadurch gekennzeichnet, dass die Kondensator-Umladeschaltung (17) zwei Transistoren (29, 30) enthält, die in Gegentakt geschaltet und von einem Vorverstärker (28, 34) angesteuert sind, wobei der Ausgang der Gegentaktschaltung (29, 30) über den ersten Kondensator (26) mit einem Pol einer ersten Diode (31) verbunden ist, der über eine zweite Diode (32) an Masse liegt, und deren anderer Pol über eine Parallelschaltung (27; 33) des zweiten Kondensators (27) und einer weiteren Diode (33) an Masse liegt.

4. Elektronischer Sicherheitstemperaturbegrenzer nach einem der Ansprüche 1 bis 3, dadurch gekennzeichnet, dass der Schwellwertschalter (15) einen Komparator (22) enthält.

5. Elektronischer Sicherheitstemperaturbegrenzer nach einem der Ansprüche 1 bis 4, dadurch gekennzeichnet, dass der Oszillator (11) ein astabiler Multivibrator ist.

6. Elektronischer Sicherheitstemperaturbegrenzer nach einem der Ansprüche 1 bis 5, dadurch gekennzeichnet, dass die Verriegelungsschaltung (19) ein Und-Gatter und die Anordnung (20) zur Umwandlung des dynamischen Signals in einen konstanten Logikwert ein RC-Glied enthält.

7. Elektronischer Sicherheitstemperaturbegrenzer nach einem der Ansprüche 1 bis 6, dadurch gekennzeichnet, dass dem Oszillator (11) und/oder der Verriegelungsschaltung (19) je ein Impedanzwandler (12) nachgeschaltet ist.

8. Elektronischer Sicherheitstemperaturbegrenzer nach einem der Ansprüche 1 bis 7, dadurch gekennzeichnet, dass der Kondensator-Umladeschaltung (17) ein Filter (16) vorgeschaltet ist.

9. Verfahren mit einem elektronischen Sicherheitstemperaturbegrenzer nach einem der Ansprüche 1 bis 8, dadurch gekennzeichnet, dass das Ausgangssignal (F) der Anordnung (20) zur Umwandlung des dynamischen Signals in einen konstanten Logikwert im Computer (3) mit einem Logikzustand einer Entriegelungstaste logisch so verknüpft wird, dass die Verriegelungsschaltung (19) bei unterschiedlichem aktuellem und vorhergehendem gespeichertem Zustand des Ausgangssignals (F) der Anordnung (20) verriegelt wird, wenn der aktuelle gespeicherte Zustand des Ausgangssignals (F) einem bestimmten Logikwert ("O") entspricht, und entriegelt wird, wenn der aktuelle gespeicherte Zustand des Ausgangsignals (F) einem andern Logikwert ("1") entspricht und gleichzeitig die Betätigung der Entriegelungstaste im Computer (3) gespeichert ist.

## Claims

1. An electronic safety temperature limiting device comprising a relay (18a; 18b), the relay coil (18a) of which is actuated by a self-monitoring regulator, wherein the regulator includes an actual value generator (14) including a temperature sensor, and a reference valve generator (13), which generators are connected to respective inputs of a threshold switch (15), the output of which is in turn connected to the relay coil (18a), characterised in that the reference value generator (13) is fed by an oscillator (11) and the output of a locking circuit (19) connected on the output side of the threshold switch (15) is connected on the one hand by way of a capacitor charge and discharge circuit (17) to the relay coil (18a) and on the other hand by way of an arrangement (20) which serves to convert a dynamic signal into a constant logic value to an operating state input (A) of the computer (3), the locking output (B) of which is connected to a locking input (D) of the locking circuit (19).

2. An electronic safety temperature limiting device according to claim 1 characterised in that the capacitor charge and discharge circuit (17) includes two capacitors (26, 27) of which the first capacitor (26) is alternately charged up and discharged when a rectangular voltage is present at the output of the threshold switch (15) and the second capacitor (27) is charged up by the discharge of the first capacitor (26).

3. An electronic safety temperature limiting device according to claim 2 characterised in that the capacitor charge and discharge circuit (17) includes two transistors (29, 30) which are connected in push-pull relationship and which are actuated by a pre-amplifier (28, 34), wherein the output of the push-pull circuit (29, 30), is connected by way of the first capacitor (26) to one pole of a first diode (31), which pole is connected to earth by way of a second diode (32), while the other pole thereof is connected to earth by way of a parallel circuit (27; 33) of the second capacitor (27) and a further diode (33).

4. An electronic safety temperature limiting device according to one of claims 1 to 3 characterised in that the threshold switch (15) includes a comparator (22).

5. An electronic safety temperature limiting device according to one of claims 1 to 4 characterised in that the oscillator (11) is an astable multivibrator.

6. An electronic safety temperature limiting device according to one of claims 1 to 5 characterised in that the locking circuit (19) includes an and-gate and the arrangement for converting the dynamic signal into a constant logic value includes an RC-arrangement.

7. An electronic safety temperature limiting device according to one of claims 1 to 6 characterised in that a respective impedance converter (12) is connected on the output side of the oscillator (11) and/or the locking circuit (19).

8. An electronic safety temperature limiting device according to one of claims 1 to 7 characterised in that a filter (16) is disposed on the input side of the capacitor charge and discharge circuit (17).

9. A process with an electronic safety temperature limiting device according to one of claims 1 to 8 characterised in that the output signal (F) of the arrangement (20) for converting the dynamic signal into a constant logic value is logically linked in the computer (3) with a logic state of an unlocking key in such a way that, with a different present and preceding stored state in respect of the output signal (F) of the arrangement (20) the locking circuit (19) is locked if the present stored state of the output signal (F) corresponds to a given logic value ('0') and is unlocked if the present stored state of the output signal (F) corresponds to another logic value ('1') and at the same time actuation of the unlocking key is stored in the computer (3).

**Revendications**

1. Limiteur électronique de température de sécurité comportant un relais (18a; 18b), dont la bobine de relais (18a) est excitée par un régulateur à auto-contrôle, ce régulateur comportant un capteur de valeur réelle (14), contenant une sonde de température, et un capteur de valeur de consigne (13), dont les sorties sont respectivement appliquées à une entrée d'un commutateur à seuil (15), dont la sortie est elle-même reliée à la bobine de relais (18a), caractérisé en ce que le capteur de valeur de consigne (13) est alimenté par un oscillateur (11) et la sortie d'un circuit de verrouillage (9) branché en série avec le commutateur à seuil (15) est reliée, d'une part par l'intermédiaire d'un circuit d'inversion de charge (17) de condensateurs à la bobine de relais (18a) et d'autre part par l'intermédiaire d'un moyen (20), qui sert à la conversion du signal dynamique en une valeur logique constante, à une entrée (A) de condition de marche d'un ordinateur (3), dont la sortie de verrouillage (B) est reliée à une entrée de verrouillage (D) du circuit de verrouillage (19).

2. Limiteur électronique de température de sécurité selon la revendication 1, caractérisé en ce que le circuit d'inversion de charge de condensateurs (17) comprend deux condensateurs (26, 27), parmi lesquels le premier condensateur (26) est alternativement chargé et déchargé lors de l'existence d'une tension de forme rectangulaire à la sortie du commutateur à seuil (15) et le second condensateur (27) chargé par la décharge du premier condensateur (26).

3. Limiteur électronique de température de sécurité selon la revendication 2, caractérisé en ce que le circuit d'inversion de charge de condensateurs (17) comporte deux transistors (29, 30) qui sont branchés en opposition et qui sont excités par un préamplificateur (28, 34), la sortie du circuit en opposition (29, 30) étant reliée par l'intermédiaire du premier condensateur (26) avec un pôle d'une première diode (31), qui est relié à la masse par l'intermédiaire d'une seconde diode, et dont l'autre pôle est relié à la masse par l'intermédiaire d'une combinaison en parallèle (27; 33) du second condensateur (27) avec une autre diode (33).

4. Limiteur électronique de température de sécurité selon une des revendications 1 à 3, caractérisé en ce que le commutateur à seuil (15) comporte un comparateur (22).

5. Limiteur électronique de température de sécurité selon une des revendications 1 à 4, caractérisé en ce que l'oscillateur (11) est un multivibrateur astable.

6. Limiteur électronique de température de sécurité selon une des revendications 1 à 5, caractérisé en ce que le circuit de verrouillage (19) comporte une porte-ET et le moyen (20) de conversion du signal dynamique en une valeur logique constante contient un composant-RC.

7. Limiteur électronique de température de sécurité selon une des revendications 1 à 6, caractérisé en ce qu'il est prévu en série avec l'oscillateur (11) et/ou le circuit de verrouillage (19) respectivement un convertisseur d'impédance (12).

8. Limiteur électronique de température de sécurité selon une des revendications 1 à 7, caractérisé en ce qu'il est prévu un filtre (16) avant et en série avec le circuit d'inversion de charge de condensateurs (17).

9. Procédé faisant intervenir un limiteur électronique de température de sécurité selon une des revendications 1 à 8, caractérisé en ce que le signal de sortie (F) du moyen (20) de conversion du signal dynamique en une valeur logique constante est combiné logiquement dans l'ordinateur (3) avec un état logique d'une touche de déverrouillage de telle sorte que le circuit de verrouillage (19) soit verrouillé, pour des états mémorisés actuel et précédent différents du signal de sortie (F) du moyen (20) quand l'état mémorisé actuel du signal du sortie (F) correspond à une valeur logique déterminée ("0") et soit déverrouillé quand l'état mémorisé actuel du signal de sortie (F) correspond à une autre valeur logique ("1") et simultanément l'actionnement de la touche de déverrouillage est mémorisé dans l'ordinateur (3).

Fig.1

Fig. 2

# Fig. 3

# Fig. 4

# Fig. 5